(19) Europäisches Patentamt
European Patent Office
Office européen des brevets

(11) **EP 3 950 722 B1**

(12) **EUROPEAN PATENT SPECIFICATION**

(45) Date of publication and mention
of the grant of the patent:
**19.04.2023  Bulletin 2023/16**

(21) Application number: **21189026.4**

(22) Date of filing: **02.08.2021**

(51) International Patent Classification (IPC):
**C08C 19/02** $^{(2006.01)}$     **C08L 9/06** $^{(2006.01)}$

(52) Cooperative Patent Classification (CPC):
(C-Sets available)
**C08C 19/02; C08L 9/06**                        (Cont.)

(54) **POLYMER BLEND AND METHOD FOR PRODUCING POLYMER BLEND, AND RUBBER COMPOSITION AND PNEUMATIC TIRE EACH USING POLYMER BLEND**

POLYMERMISCHUNG UND VERFAHREN ZUM HERSTELLEN EINER POLYMERMISCHUNG, SOWIE GUMMIZUSAMMENSETZUNG UND LUFTREIFEN JEWEILS UNTER VERWENDUNG EINER POLYMERMISCHUNG

MÉLANGE DE POLYMÈRES, PROCÉDÉ DE PRODUCTION DE MÉLANGE DE POLYMÈRES, COMPOSITION DE CAOUTCHOUC ET PNEU UTILISANT UN MÉLANGE DE POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.08.2020   JP 2020131535**

(43) Date of publication of application:
**09.02.2022   Bulletin 2022/06**

(73) Proprietor: **Asahi Kasei Kabushiki Kaisha Tokyo 1000006 (JP)**

(72) Inventors:
• **KIKUCHI, Akitomo**
  **Tokyo, 1000006 (JP)**
• **YASUMOTO, Atsushi**
  **Tokyo, 1000006 (JP)**

(74) Representative: **Strehl Schübel-Hopf & Partner Maximilianstrasse 54 80538 München (DE)**

(56) References cited:
**EP-A1- 1 514 901       EP-A1- 1 544 241
EP-A1- 1 612 241       EP-A1- 3 147 328
EP-A1- 3 156 429       JP-A- 2018 131 515
JP-B2- 4 881 562       US-A1- 2006 173 134
US-A1- 2012 010 356    US-A1- 2018 237 619**

(52) Cooperative Patent Classification (CPC): (Cont.)

C-Sets
**C08L 9/06, C08L 9/06**

C-Sets
**C08L 9/06, C08L 9/06**

**Description**

BACKGROUND OF THE INVENTION

Field of the Invention

The present invention relates to a polymer blend and a method for producing the polymer blend, and a rubber composition and a pneumatic tire each using the polymer blend.

Description of the Related Art

There is a demand for a reduction in exchange frequency of tire, namely, an enhancement in durability of tire, along with the future popularization of selfdriving technologies. In particular, brake performance is demanded to be maintained for a longer period than conventional one in order to secure the safety of passengers.

An enhancement in wear resistance is essential for an enhancement in durability of tire, and Japanese Patent No. 6004081 discloses an enhancement in wear resistance by use of a polymer including an ethylene structure for a tire tread.

It is known that tread rubber for eco-friendly tires is used in combination with different type of rubber to be thereby enhanced in balance between conflicting performances, for example, balance between rolling resistance and brake performance, or balance between performance and price. For example, WO 2018/062473 discloses a method capable of producing an inexpensive rubber composition having a high strength by blending a hydrogenated polymer and a non-hydrogenated polymer.

However, in a case where the hydrogenated polymer and the non-hydrogenated polymer are separately kneaded with a crosslinking agent, a filler, and the like to thereby produce respective intermediate compositions and thereafter the intermediate composition including the hydrogenated polymer and the intermediate composition including the non-hydrogenated polymer are further kneaded as described in WO 2018/062473, such compositions are hardly admixed with any different type of rubber component and thus a complicated step is needed.

Thus, there is a demand for a polymer blend which not only is enhanced in durability by use of a hydrogenated polymer, in particular, enhancements in wear resistance, and brake performance and long-term characteristics thereof, but also can be more simply blended with other material.

The present invention has been made in view of the above problems, and an object thereof is to provide a polymer blend which can allow for production of a tire tread excellent in wear resistance, and brake performance and long-term characteristics thereof, and a method for producing the polymer blend, as well as a rubber composition and a pneumatic tire each using the polymer blend.

EP 3 147 328 A1, US 2006/173134 A1, EP 3 156 429 A1, EP 1 514 901 A1, JP 2018/131515 A, JP 4 881562 B2, EP 1 612 241 A1, EP 1 544 241 A1, US 2018/237619 A1, and US 2012/010356 A1 disclose polymer compositions.

SUMMARY OF THE INVENTION

The present inventors have made intensive studies in order to solve the above problems. As a result, the inventors have found that the above problems can be solved by mixing and using predetermined polymers, leading to completion of the present invention.

The present invention is defined in the appended claims.

According to the present invention, there can be provided a polymer blend which can allow for production of a tire tread excellent in wear resistance, and brake performance and long-term characteristics thereof, and a method for producing the polymer blend, as well as a rubber composition and a pneumatic tire each using the polymer blend.

DETAILED DESCRIPTION OF THE PREFERRED EMBODIMENTS

Hereinafter, an embodiment (hereinafter, referred to as "the present embodiment".) of the present invention is described in detail, but the present invention is not limited thereto and can be variously modified without departing from the gist thereof.

[Polymer blend]

A polymer blend of the present embodiment includes a first polymer and a second polymer, in which the first polymer is a random copolymer having an aromatic vinyl compound-derived constituent unit, a conjugated diene compound-derived constituent unit, and an ethylene-derived constituent unit, the second polymer is a non-hydrogenated random copolymer having an aromatic vinyl compound-derived constituent unit and a conjugated diene compound-derived constituent unit, and the difference obtained by subtracting the SP value of the second polymer from the SP value of the first polymer is 0 or more and 0.60 or less.

In the present embodiment, the respective SP values of the first polymer and the second polymer are adjusted within appropriate ranges, to result in not only an improvement in blending properties, but also a more enhancement in wear resistance in use for a pneumatic tire tread. It is presumed that such effects not only allow a crystalline component produced by an ethylene chain in the first polymer to exert a high reinforcement effect, but also allow the SP value of a polymer different in structure to be controlled within an appropriate range, to result in uniform entanglement between the first polymer and the second polymer and no separation therebetween for a long period to thereby allow a reinforcement effect to be maintained for a long period, resulting in contribution to maintenance of brake performance and long-term characteristics thereof.

The polymer blend is herein configured mainly from the first polymer and the second polymer, and is different, in this regard, from a composition including large amounts of a first polymer, a second polymer and other component.

The content of the first polymer is preferably 5 mass% or more and 30 mass% or less, more preferably 10 mass% or more and 30 mass% or less, further preferably 15 mass% or more and 25 mass% or less based on the total amount of the polymer blend. The content of the second polymer is preferably 70 mass% or more and 95 mass% or less, preferably 70 mass% or more and 90 mass% or less, preferably 75 mass% or more and 85 mass% or less based on the total amount of the polymer blend. The respective contents of the first polymer and the second polymer are within the ranges, resulting in tendencies to more improve compatibility between the first polymer and the second polymer and to more enhance wear resistance, and brake performance and long-term characteristics thereof.

The content of any component other than the first polymer and the second polymer, included in the polymer blend, is preferably 0 to 10 mass%, more preferably 0 to 5 mass%, further preferably 0 to 3 mass% based on the total amount of the polymer blend.

(Configuration of first polymer)

The first polymer is a random copolymer having an aromatic vinyl compound-derived constituent unit (hereinafter, also referred to as "aromatic moiety".), a conjugated diene compound-derived constituent unit (hereinafter, also referred to as "conjugated diene moiety".), and an ethylene-derived constituent unit (hereinafter, also referred to as "ethylene moiety".). The first polymer may be produced by performing a hydrogenation reaction of a diene-based copolymer having an aromatic moiety and a conjugated diene moiety to thereby partially form a double bond moiety in the conjugated diene moiety into an ethylene moiety, or may be produced by random copolymerization of an aromatic vinyl compound, a conjugated diene compound, and ethylene.

The first polymer is preferably obtained by subjecting the diene-based copolymer to the hydrogenation reaction, from the viewpoint of production cost. Hereinafter, the first polymer thus obtained is also referred to as "hydrogenated diene-based copolymer". The hydrogenated diene-based copolymer can be increased in percentage of hydrogenation to result in an increase in content of the ethylene moiety. The ethylene moiety in the hydrogenated diene-based copolymer here encompasses any moiety obtained by hydrogenation of one (for example, 1,4 bond of a polymer of 1,3-butadiene as a monomer) which forms a polymer chain at each of both ends of a main chain of a conjugated diene compound monomer unit, and the ethylene moiety does not encompass any moiety obtained by hydrogenation of any other form (for example, 1,2-vinyl bond of a polymer of 1,3-butadiene as a monomer).

The aromatic vinyl compound is not particularly limited, and examples thereof include styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene. These may be used singly or in combinations of two or more kinds thereof. In particular, styrene is particularly preferable from the practical viewpoint of, for example, availability of a monomer.

The conjugated diene compound is not particularly limited, and examples thereof include 1,3-butadiene, isoprene, 1,3-pentadiene, 2,3-dimethylbutadiene, 2-phenyl-1,3-butadiene, and 1,3-hexadiene. These may be used singly or in combinations of two or more kinds thereof. In particular, 1,3-butadiene and isoprene are preferable, and 1,3-butadiene is more preferable, from the practical viewpoint of, for example, availability of a monomer.

The first polymer is a random copolymer. The "random copolymer" herein refers to one in which the percentage of a long chain in an aromatic vinyl compound-derived constituent unit is 10 mass% or less. The percentage of the long chain here means the percentage of a chain (long chain) having eight or more of continuous certain constituent units, in all such certain constituent units. In a case where the percentage of the long chain is more than 10 mass%, namely, the first polymer is not a random copolymer, fuel economy tends to be deteriorated. In a case where the percentage of the long chain in the aromatic vinyl compound-derived constituent unit is 10 mass% or less, the respective percentages of the long chains of a conjugated diene compound-derived constituent unit and an ethylene-derived constituent unit are relatively low, and thus whether or not the first polymer is a random copolymer can be determined by the percentage of the long chain in the aromatic vinyl compound-derived constituent unit.

The percentage of the long chain in the aromatic vinyl compound-derived constituent unit can be here calculated as the percentage of the value of integral of the following chemical shift S range (a) based on the total value of integral of the following chemical shift S ranges (a) to (c) in a 1H-NMR spectrum of the first polymer, as measured with deuterochloroform as a solvent. For example, in a case where the aromatic vinyl compound is styrene, the percentage of such styrene can be calculated by determining the percentage of the value of integral of the range (a) based on the total value of integral of the respective ranges (a) to (c) and multiplying the percentage by 2.5. Thus, the percentage of the long chain in the aromatic vinyl compound-derived constituent unit can be understood.

(a) long chain of 8 or more in aromatic vinyl compound: $6.00 \leq S < 6.68$
(b) long chain of 2 to 7 in aromatic vinyl compound: $6.68 \leq S < 6.89$
(c) short chain in aromatic vinyl compound: $6.89 \leq S < 8.00$

As described above, the first polymer is preferably a hydrogenated diene-based random copolymer from the viewpoints of commercial production and low fuel economy. The first polymer may be modified or unmodified, and is preferably a modified random copolymer from the viewpoints of brake performance and wear resistance. The modification method is described below, and examples of the first polymer modified include a polymer having a polymerization end terminal into which a functional group is introduced by a modifying agent.

The iodine value of the first polymer is preferably 15 or more, more preferably 30 or more, further preferably 45 or more. The iodine value of the first polymer is preferably 200 or less, more preferably 170 or less, further preferably 130 or less. The iodine value of the first polymer is within the range, resulting in a tendency to more enhance wear resistance and crosslinking properties. The iodine value is measured according to a method described in Examples below.

In a case where the first polymer is a hydrogenated diene-based copolymer, the percentage of hydrogenation thereof (percentage of hydrogenation of the conjugated diene moiety) is preferably 50 mol% or more, more preferably 60 mol% or more, further preferably 70 mol% or more from the viewpoint of crosslinking properties. The percentage of hydrogenation is preferably 95 mol% or less, more preferably 90 mol% or less, further preferably 85 mol% or less from the viewpoint of crosslinking properties. The percentage of hydrogenation can be calculated from the spectrum decrease rate with respect to an unsaturated bond moiety, in a spectrum obtained by 1H-NMR measurement.

The content of the aromatic moiety is preferably 10 mass% or more, more preferably 20 mass% or more, further preferably 30 mass% or more based on the total amount of the first polymer, from the viewpoints of wear resistance and wet grip performance. The content of the aromatic moiety is preferably 60 mass% or less, more preferably 50 mass% or less based on the total amount of the first polymer, from the viewpoint of low fuel economy. The content of the aromatic moiety is measured according to a method described in Examples below.

The weight average molecular weight (Mw) of the first polymer is preferably $10 \times 10^4$ or more, more preferably $20 \times 10^4$ or more, further preferably $23 \times 10^4$ or more, particularly preferably $30 \times 10^4$ or more from the viewpoint of compatibility between the first polymer and the second polymer. The weight average molecular weight of the first polymer is preferably $200 \times 10^4$ or less, more preferably $100 \times 10^4$ or less, further preferably $70 \times 10^4$ or less from the viewpoint of Mooney viscosity.

The weight average molecular weight (Mw) of the first polymer is preferably $23 \times 10^4$ to $200 \times 10^4$, more preferably $30 \times 10^4$ to $100 \times 10^4$ or more from the viewpoints of cold flow properties, attaching properties in production, and bale moldability.

The molecular weight distribution (Mw/Mn) of the first polymer is preferably 1.1 or more, more preferably 1.2 or more, further preferably 1.3 or more from the viewpoint of processability. The molecular weight distribution of the first polymer is preferably 4.0 or less, more preferably 3.0 or less, further preferably 2.0 or less from the viewpoint of low fuel economy. The weight average molecular weight (Mw) and the number average molecular weight (Mn) are each measured according to a method described in Examples below.

The glass transition temperature (Tg) of the first polymer is preferably -50°C or more, more preferably - 40°C or more, further preferably -30°C or more from the viewpoints of brake performance and long-term characteristics thereof. The glass transition temperature of the first polymer is preferably -10°C or less, more preferably -15°C or less, further preferably - 20°C or less from the viewpoint of low temperature performance. The glass transition temperature of the first polymer is within the range, resulting in a tendency to more enhance wear resistance, and brake performance and long-term characteristics thereof.

The Tg can be controlled by, for example, the compositional ratio between the aromatic vinyl compound and the conjugated diene compound, and the iodine value. The method for controlling the Tg is not particularly limited, and, for example, the Tg can be raised by an increase in compositional ratio of the aromatic vinyl compound, the Tg can be raised by an increase in compositional ratio of a 1,2 bond in the conjugated diene compound, and the Tg can be raised by a decrease in iodine value. The Tg can be dropped by any operation opposite thereto. More specifically, the iodine value is decreased and the Tg is raised as in Production Example 1-1, when the percentage of hydrogenation is increased as compared with the composition described in Production Example 1-4 below. The Tg is raised as in Production Example 1-1, when the compositional ratio of the aromatic vinyl compound is increased as compared with the composition described in Production Example 1-5 below. In another example, in a case where the content of the aromatic vinyl compound in the polymer is 20 mass%, the Tg can be -50°C or more by setting the iodine value to about 26 to 56. In a case where the iodine value is set to 112, the Tg can b -50°C or more by setting the content of the aromatic vinyl compound to about 24 to 35 mass%. The amount of vinyl bond also has any effect on the Tg, and the effect on the Tg by the amount of vinyl bond is the same as in the second polymer, and is described in the section of Second polymer. The glass transition temperature (Tg) is here measured according to a method described in Examples below.

The first polymer is preferably one high in compositional ratio of the aromatic vinyl compound and low in iodine value from the viewpoint of wear resistance.

The compatibility parameter (SP value) of the first polymer is preferably 17.50 or more, more preferably 17.60 or more, further preferably 17.70 or more from the viewpoint of compatibility with the second polymer. The SP value of the first polymer is preferably 18.20 or less, more preferably 18.10 or less, further preferably 18.00 or less from the viewpoint of compatibility with the second polymer.

In a case where the first polymer is a hydrogenated copolymer, the compatibility parameter of the first polymer is more preferably 17.50 or more from the viewpoint of commercial productivity. The first polymer being a copolymer having an ethylene-derived constituent unit, when has an SP value of 17.50 or more, tends to be relatively high in compositional ratio of the aromatic vinyl compound and low in compositional ratio of the conjugated diene. Thus, in a case where the first polymer is a hydrogenated copolymer, the SP value is 17.50 or more to result in tendencies to shorten the hydrogenation reaction time and more increase the production efficiency. A preferable upper limit of the SP value is set in a relative relationship with a preferable SP value of the second polymer.

The SP value can be controlled by, for example, the compositional ratio between the aromatic vinyl compound and the conjugated diene compound, and the iodine value. The method for controlling the SP value is not particularly limited, and, for example, the SP value can be increased by an increase in compositional ratio of the aromatic vinyl compound and the SP value can be decreased by an increase in amount of 1,2-vinyl bond in the conjugated diene compound. The SP value can also be increased by an increase in iodine value. For example, the iodine value is increased and the SP value is increased as in Production Example 1-4, when the percentage of hydrogenation is decreased as compared with the composition described in Production Example 1-1 below. The SP value is increased as in Production Example 1-1, when the compositional ratio of the aromatic vinyl compound is increased as compared with the composition described in Production Example 1-5 below.

The first polymer is preferably high in compositional ratio of the aromatic vinyl compound and low in iodine value from the viewpoint of wear resistance. In order that the compositional ratio of the aromatic vinyl compound is set as high as about 32 mass% in a case where the SP value is 17.50 or more and 18.20 or less, preferably, the ratio of 1,2-bond is 23 to 45 mol% and the iodine value is 53 to 246. On the other hand, in order that the compositional ratio of the aromatic vinyl compound is as low as, for example, about 20 mass%, preferably, the ratio of 1,2-bond is 11 to 20 mol% and the iodine value is 211 to 300.

The compatibility parameter (SP value) is measured by a method described in Examples below.

(Configuration of second polymer)

The second polymer is a non-hydrogenated random copolymer having an aromatic vinyl compound-derived constituent unit and a conjugated diene compound-derived constituent unit.

The aromatic vinyl compound is not particularly limited, and examples thereof include styrene, α-methylstyrene, 1-vinylnaphthalene, 3-vinyltoluene, ethylvinylbenzene, divinylbenzene, 4-cyclohexylstyrene, and 2,4,6-trimethylstyrene. These may be used singly or in combinations of two or more kinds thereof, and in particular, styrene is particularly preferable from the practical viewpoint of, for example, availability of a monomer.

The conjugated diene compound is not particularly limited, and examples thereof include 1,3-butadiene, isoprene, 1,3-pentadiene, 2,3-dimethylbutadiene, 2-phenyl-1,3-butadiene, and 1,3-hexadiene. These may be used singly or in combinations of two or more kinds thereof. In particular, 1,3-butadiene and isoprene are preferable, and 1,3-butadiene is more preferable, from the practical viewpoint of, for example, availability of a monomer.

The second polymer is a random copolymer as in the first polymer. The second polymer may be modified or unmodified, and is preferably a modified random copolymer from the viewpoint of low fuel economy. The modification method is described below, and examples of the second polymer modified include a polymer having a polymerization end terminal into which a functional group is introduced by a modifying agent.

The content of the aromatic moiety is preferably 1 mass% or more, more preferably 5 mass% or more, further preferably 10 mass% or more based on the total amount of the second polymer, from the viewpoint of tensile strength. The content of the aromatic moiety is preferably 30 mass% or less, more preferably 25 mass% or less based on the total amount of the second polymer, from the viewpoint of low fuel economy. The content of the aromatic moiety is measured according to a method described in Examples below.

The weight average molecular weight (Mw) of the second polymer is preferably $10 \times 10^4$ or more, more preferably $20 \times 10^4$ or more, further preferably $30 \times 10^4$ or more from the viewpoint of compatibility between the first polymer and the second polymer. The weight average molecular weight of the second polymer is preferably $200 \times 10^4$ or less, more preferably $100 \times 10^4$ or less, further preferably $70 \times 10^4$ or less from the viewpoint of Mooney viscosity.

The molecular weight distribution (Mw/Mn) of the second polymer is preferably 1.1 or more, more preferably 1.2 or more, further preferably 1.3 or more from the viewpoint of processability. The molecular weight distribution of the second polymer is preferably 4.0 or less, more preferably 3.0 or less, further preferably 2.0 or less from the viewpoint of low fuel economy.

The glass transition temperature (Tg) of the second polymer is preferably -100°C or more, more preferably -90°C or more, further preferably -80°C or more from the viewpoint of low fuel economy. The glass transition temperature of the second polymer is preferably -40°C or less, more preferably -50°C or less, further preferably -60°C or less from the viewpoint of low fuel economy. The glass transition temperature of the second polymer is within the range, resulting in a tendency to more enhance wear resistance, and brake performance and long-term characteristics thereof.

The Tg can be controlled by, for example, the compositional ratio between the aromatic vinyl compound and the conjugated diene compound. The method for controlling the Tg is not particularly limited, and, for example, the Tg can be dropped by a decrease in compositional ratio of the aromatic vinyl compound, and the Tg can be dropped by a decrease in compositional ratio of 1,2-vinyl bond in the conjugated diene compound. The Tg can be raised by any operation opposite thereto.

The second polymer is preferably low in compositional ratio of the aromatic vinyl compound and low in compositional ratio of 1,2-vinyl bond in the conjugated diene compound. For example, in a case where the content of the aromatic vinyl compound is set to 5 mass%, the Tg can be -100°C or more and -40°C or less by setting the content of the 1,2-vinyl bond to 1 to 70 mol%.

The compatibility parameter (SP value) of the second polymer is preferably 17.30 or more, more preferably 17.40 or more from the viewpoint that a polymer structure is set so as to result in an enhancement in fuel-saving economy of tire in the case of use of the polymer blend for a tire tread. The SP value of the second polymer is preferably 17.70 or less, more preferably 17.60 or less from the same viewpoint.

The SP value can be controlled by, for example, the compositional ratio between the aromatic vinyl compound and the conjugated diene compound. The method for controlling the SP value is not particularly limited, and, for example, the SP value can be decreased by a decrease in compositional ratio of the aromatic vinyl compound, and the SP value can be increased by a decrease in amount of 1,2-vinyl bond in the conjugated diene compound. For example, the SP value is increased as in Production Example 2-2, when the compositional ratio of the aromatic vinyl compound is increased as compared with the composition described in Production Example 2-1 below. In a case where the content of the aromatic vinyl compound is 0 mass%, the SP value can be controlled to about 17.3 to 17.5 by changing the amount of 1,2-vinyl bond in the range from 20 to 48 mol%. In a case where the content of the aromatic vinyl compound is 30 mass% which is close to a preferable upper limit value, the SP value can be controlled to about 17.5 to 17.7 by changing the ratio of 1,2-vinyl bond in the range from 82 to 98 mol%.

For example, in a case where a polymer having a glass transition temperature of -60°C is to be obtained, the iodine value of a polymer where the content of aromatic vinyl is 5 to 25 mass% and the amount of 1,2-vinyl bond in the conjugated diene compound is 20 to 40 mol% is preferably 15 to 150 by a hydrogenation reaction.

The second polymer is preferably low in compositional ratio of the aromatic vinyl compound from the viewpoint of compatibility.

(Configuration of polymer blend)

The difference obtained by subtracting the SP value of the second polymer from the SP value of the first polymer in the polymer blend including the first polymer and the second polymer is 0 or more and 0.60 or less. The difference in SP value is one measure which represents compatibility between different polymers, and it is said that a smaller difference in SP value means more favorable compatibility. In this regard, a polymer including an ethylene-derived structure, typified by polyethylene, has a crystalline structure present therein and thus is hardly compatible with any other polymer having no crystalline structure and is separated during storage for a long period and/or in use.

In this regard, the first polymer, which has an ethylene-derived structure, has been thus confirmed to exhibit the same tendency, but the inventors have made intensive studies and, as a result, have found that a polymer blend as a specified combination of the above-mentioned first polymer and second polymer, in a case where the difference between the respective SP values of the first polymer and the second polymer is within a specified numerical value range of 0 or more and 0.60 or less, exhibits favorable compatibility, is stably present without separation between the polymers during storage for a long period and/or in use, and is enhanced in wear resistance, and brake performance and long-term characteristics thereof.

The difference obtained by subtracting the SP value of the second polymer from the SP value of the first polymer is 0.60 or less, preferably 0.55 or less, more preferably 0.50 or less, further preferably 0.45 or less from the viewpoint of compatibility. The reason why the upper limit of the difference in SP value is limited to 0.60 is not particularly limited, and it is expected that a high degree of structure similarity between the respective polymer chains of the first polymer and the second polymer contributes to wear resistance, and brake performance and long-term characteristics thereof.

The difference obtained by subtracting the SP value of the second polymer from the SP value of the first polymer may be 0 or more, 0.05 or more, 0.10 or more, 0.15 or more, 0.20 or more, 0.25 or more from the viewpoints of wear resistance, and brake performance and long-term characteristics thereof. The reason why the lower limit of the difference in SP value is set to 0 is not particularly limited, and it is expected that the first polymer is relatively higher in ratio of an aromatic vinyl compound-derived structure, namely, is higher in SP value, than the second polymer, to thereby allow the ethylene-derived structure and the aromatic vinyl compound-derived structure to coordinately act, and is incorporated into a polymer chain of the second polymer having no ethylene-derived structure and thus crystallized, and thus the polymers are stably present without being separated during storage for a long period and/or in use and contribute to wear resistance, and brake performance and long-term characteristics thereof.

The difference obtained by subtracting the glass transition temperature of the second polymer of the polymer blend from the glass transition temperature of the first polymer thereof is preferably 20°C or more, more preferably 25°C or more, further preferably 30°C or more from the viewpoint of an enhancement in brake performance on a wet road surface. The difference obtained by subtracting the glass transition temperature of the second polymer from the glass transition temperature of the first polymer is preferably less than 65°C, more preferably less than 60°C, further preferably less than 55°C from the viewpoints of wear resistance and long-term characteristics of brake performance.

(Methods for producing first polymer and second polymer)

The method for producing the first polymer is not particularly limited, and examples thereof include a polymerization step of randomly copolymerizing the aromatic vinyl compound and the conjugated diene compound, and a hydrogenation step of subjecting the polymer obtained in the polymerization step to a hydrogenation reaction; or a method including a polymerization step of randomly copolymerizing the aromatic vinyl compound, the conjugated diene compound, and ethylene. Even in the case of performing the hydrogenation step, ethylene may be copolymerized in the polymerization step. Even in the case of copolymerizing ethylene in the polymerization step, the hydrogenation step may be performed.

The method for producing the second polymer is not particularly limited, and examples thereof include a polymerization step of randomly copolymerizing the aromatic vinyl compound and the conjugated diene compound.

The respective methods for producing the first polymer and the second polymer may include a modification step of modifying the polymer obtained in each of the polymerization steps. In a case where the modification step is performed, it is preferable to add the conjugated diene compound at the end of each of the polymerization steps to thereby allow the polymerization terminal to be a conjugated diene compound-derived constituent unit. Thus, a reaction by a modifying agent more suitably progresses.

(Polymerization step)

The polymerization step is a step of randomly copolymerizing the monomer. The polymerization method of the first or second polymer is not particularly limited, and any of a solution polymerization method, a gas phase polymerization method, and a bulk polymerization method can be used. In particular, a solution polymerization method is particularly preferable from the viewpoint of commercial production. The polymerization system may be either a batch system or a continuous system.

In a case where a solution polymerization method is used, the monomer concentration in the solution is preferably 5 mass% or more, more preferably 10 mass% or more. The monomer concentration in the solution is 5 mass% or more, to result in tendencies to increase the amount of a copolymer obtained and decrease the cost. The monomer concentration in the solution is preferably 50 mass% or less, more preferably 30 mass% or less. The monomer concentration in the solution is 50 mass% or less to result in tendencies to more decrease the solution viscosity, enhance the stirring efficiency, and easily perform polymerization.

(Polymerization initiator)

In a case where anionic polymerization is performed, the polymerization initiator is not particularly limited, and an organolithium compound is preferably used. The organolithium compound is not particularly limited, and examples thereof include ethyllithium, n-propyllithium, isopropyllithium, n-butyllithium, sec-butyllithium, tertbutyllithium, tert-octyllithium, n-decyllithium, phenyllithium, 2-naphthyllithium, 2-butyl-phenyllithium, 4-phenyl-butyllithium, cyclohexyllithium, cyclopentyllithium, and a reaction product of diisopropenylbenzene and butyllithium. In particular, one having an alkyl group having 2 to 20 carbon atoms is preferable, and n-butyllithium or sec-butyllithium is preferable from the viewpoints of, for example, availability and safety.

In a case where coordination polymerization is performed, the polymerization initiator to be used is preferably a polymerization catalyst composition described in Japanese Patent Laid-Open No. 2020-45500.

The method for using the polymerization initiator for anionic polymerization or coordination polymerization to thereby produce a copolymer is not particularly limited, and a conventionally known method can be used. Specifically, an objective copolymer can be obtained by polymerizing styrene, 1,3-butadiene, ethylene, or the like with butyllithium as the polymerization initiator in an organic solvent inert to the reaction, for example, in a hydrocarbon-based solvent such as an aliphatic, alicyclic, or aromatic hydrocarbon compound, if necessary, in the presence of a randomizer.

(Hydrocarbon-based solvent)

The hydrocarbon-based solvent is preferably one having 3 to 8 carbon atoms, and examples thereof can include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used singly or as a mixture of two or more kinds thereof.

(Randomizer in anionic polymerization)

The randomizer means a compound having a function of control of a microstructure of a conjugated diene portion in the copolymer, for example, an increase in 1,2-vinyl bond in butadiene or a 3,4-bond in isoprene, or control of the compositional distribution of a monomer unit in the copolymer, for example, randomization of a styrene unit and a butadiene unit in a styrene/butadiene copolymer.

The randomizer is not particularly limited, and any one among known compounds conventionally commonly used as a randomizer can be used. Examples can include ether compounds and tertiary amine compounds, such as dimethoxybenzene, tetrahydrofuran, dimethoxyethane, diethylene glycol dibutyl ether, diethylene glycol dimethyl ether, 2,2-di(2-tetrahydrofuryl)propane, triethylamine, pyridine, N-methylmorpholine, N,N,N',N'tetramethylethylenediamine, and 1,2-dipiperidinoethane. Any of potassium salt compounds such as potassium-t-amylate and potassium-t-butoxide, and sodium salt compounds such as sodium-t-amylate can also be used. These randomizers may be used singly or in combinations of two or more kinds thereof.

The amount of the randomizer used is preferably 0.01 molar equivalents or more, more preferably 0.05 molar equivalents or more, per mol of the polymerization initiator. The amount of the randomizer used is 0.01 molar equivalents or more to result in a tendency to provide more randomization. The amount of the randomizer used is preferably 1000 molar equivalents or less, more preferably 500 molar equivalents or less per mol of the polymerization initiator. The amount of the randomizer used is 1000 molar equivalents or less to result in a tendency to inhibit randomization from hardly occurring due to a low reaction speed of the monomer.

(Reaction temperature)

The reaction temperature in polymerization is not particularly limited as long as the reaction suitably progresses, and is usually preferably -10°C to 100°C, more preferably 25°C to 70°C.

(Modification step)

The modification step is, for example, a step of reacting an active terminal of the copolymer obtained in the polymerization step with a compound having a functional group which interacts with silica. The modification step can introduce a functional group which interacts with silica, into a polymerization end terminal of the copolymer, to thereby obtain a copolymer with a modified polymerization end terminal. The terminal in the present embodiment means any portion other than a structure derived from a monomer having a carbon-carbon double bond, which is present at a terminal of a molecular chain.

A polymerization initiator having the functional group which interacts with silica, in its molecule, can be used to perform polymerization, to thereby introduce the functional group into an initiation terminal of the copolymer. The functional group can also be, if necessary, introduced into each of both initiation and end terminals.

The copolymer for use in the modification reaction (hereinafter, also referred to as "terminal modification reaction".) may be one whose polymerization initiation terminal is not modified or is modified, as long as such one has an active terminal. The compound is not particularly limited as long as it is a compound having a functional group which interacts with silica and capable of reacting with a polymerization active terminal, and a method is preferable which involves introduction by use of a tin atom- or nitrogen atom-containing terminal modifying agent and a method is more preferable which involves introduction by use of a nitrogen atom-containing terminal modifying agent.

The nitrogen atom-containing terminal modifying agent is preferably, for example, an isocyanate compound, an isothiocyanate compound, an isocyanuric acid derivative, a nitrogen group-containing carbonyl compound, a nitrogen group-containing vinyl compound, a nitrogen group-containing epoxy compound, or a nitrogen group-containing alkoxysilane compound from the viewpoints of polymerization productivity and a high percentage of modification. In particular, a nitrogen group-containing alkoxysilane compound is more preferable from the viewpoints of polymerization productivity, a high percentage of modification, and tensile strength of a tire obtained.

The nitrogen group-containing alkoxysilane compound is not particularly limited, and examples thereof include 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy,2-methyl-1-(3-trimethoxysilylpropyl)-1-aza-2-silacyclopentane, 2-ethoxy,2-ethyl-1-(3-triethoxysilylpropyl)-1-aza-2-silacyclopentane, 2-methoxy,2-methyl-1-(3-dimethoxymethylsilylpropyl)-1-aza-2-silacyclopentane, 2-ethoxy,2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl) amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N1-(3-(bis(3-(trimethoxysilyl)propyl)amino)propyl)-N1-methyl-N3-(3-(methyl(3-(trimethoxysilyl)propyl)amino)propyl)-N3-(3-(trimethoxysilyl)propyl)-1,3-propanediamine.

The terminal modification reaction can be performed as, for example, a solution reaction. The solution reaction may be performed by use of a solution including an unreacted monomer after the completion of the polymerization reaction in the polymerization step, or may be performed by isolating a copolymer included in the solution and dissolving it in a proper solvent such as cyclohexane. The terminal modification reaction may also be performed by use of either a batch system or a continuous system. The method for adding the terminal modifying agent is not particularly limited, and examples thereof include a method for adding it at one time, a method for adding it in portions, and a method for continuously adding it.

The amount of the terminal modifying agent used in the terminal modification reaction may be appropriately set depending on the type of the terminal modifying agent used in the reaction, and is preferably 0.1 molar equivalents or more, more preferably 0.3 molar equivalents or more relative to a metal atom involved in the polymerization reaction, included in the polymerization initiator. An amount of 0.1 molar equivalents or more enables the modification reaction to sufficiently progress and enables dispersibility of silica to be suitably improved.

The temperature of the terminal modification reaction is usually the same as the temperature of the polymerization reaction, and is preferably -20 to 150°C, more preferably 0 to 120°C, particularly preferably 20 to 100°C. A higher temperature of the modification reaction tends to result in a decrease in viscosity of a modified copolymer. On the other hand, a lower temperature of the modification reaction tends to allow a polymerization active terminal to be hardly deactivated. The reaction time of the modification reaction is preferably 1 minute to 5 hours, more preferably 2 minutes to 1 hour.

(Stopping of reaction)

The anionic polymerization can be stopped by addition of a reaction stopping agent commonly used in the art. Examples of such a reaction stopping agent include polar solvents having active proton, for example, alcohols such as methanol, ethanol and isopropanol, and acetic acid, and any mixed liquid thereof, or any mixed liquid of such a polar solvent and a non-polar solvent such as hexane or cyclohexane. The amount of the reaction stopping agent added is usually sufficiently any molar amount equal to or about twice that of an anionic polymerization initiator.

(Hydrogenation step)

In a case where the first polymer is produced by hydrogenation, the hydrogenation method and reaction conditions are not particularly limited, and such hydrogenation may be made by a known method in known conditions. The hydrogenation reaction can be usually performed in the presence of a hydrogenation catalyst at 20 to 150°C and a hydrogen pressure of 0.1 to 10 MPa. The percentage of hydrogenation can be arbitrarily selected by changing the amount of the hydrogenation catalyst, the hydrogen pressure in the hydrogenation reaction, the reaction time, and the like.

The hydrogenation catalyst here used can be a compound having any of metals in Groups 4 to 11 of the periodic table of the elements. For example, a compound containing any of Ti, V, Co, Ni, Zr, Ru, Rh, Pd, Hf, Re, and Pt atoms can be used as the hydrogenation catalyst. More specific examples of the hydrogenation catalyst can include a metallocene compound of Ti, Zr, Hf, Co, Ni, Pd, Pt, Ru, Rh, Re, or the like; a supported-type heterogeneous catalyst in which a metal such as Pd, Ni, Pt, Rh, or Ru is supported on a carrier such as carbon, silica, alumina, or diatomaceous earth; a homogeneous Ziegler catalyst in which an organic salt or an acetylacetone salt of a metal element such as Ni or Co and a reducing agent such as organoaluminum are combined; an organometallic compound or complex of Ru, Rh, or the like; and fullerene and carbon nanotube each occluding hydrogen.

In particular, a metallocene compound containing any of Ti, Zr, Hf, Co, and Ni is preferable in that the hydrogenation reaction can be made in a homogeneous system in an inert organic solvent. A metallocene compound containing any of Ti, Zr, and Hf is further preferable. These hydrogenation catalysts may be used singly or in combinations of two or more kinds thereof.

A preferable method for obtaining the first polymer involves performing solution polymerization, performing a modification treatment directly using a polymer solution obtained, and then, if necessary, subjecting the resultant to the hydrogenation step.

The first or second polymer is obtained by removing a solvent from the polymer solution obtained above, and isolating the polymer. Such isolation of the polymer can be performed by, for example, a known solvent removal method such as steam stripping or a drying operation such as a heat treatment using a dehydration extruder, a dry extruder, or a conveyor.

(Method for producing polymer blend)

The method for producing the polymer blend is not particularly limited, and the polymer blend may be obtained by kneading only the first polymer and the second polymer, or kneading not only the first polymer and the second polymer, but also, if necessary, any component to be compounded, by use of a kneader such as an open kneader (for example, a roll) or a closed kneader (for example, a Banbury mixer).

The polymer blend can also be obtained by a method including a step of mixing a first polymer solution and a second polymer solution to obtain a mixed polymer solution and a step of desolvating the mixed polymer solution obtained. In this method, the first polymer solution and the second polymer solution are mixed and then the first polymer and the second polymer are isolated together in the form of the polymer blend, instead of isolation of the first polymer and the second polymer from the first polymer solution and the second polymer solution, respectively.

The first polymer solution and the second polymer solution are solutions after the polymerization step and before isolation of the polymers. In a case where the modification step or the hydrogenation step is performed, the solutions are solutions after such a step and before isolation of the polymers.

The method for mixing the first polymer solution and the second polymer solution is not particularly limited, and can be a known method.

In a case where the polymer blend is obtained by the method, the first polymer is moderately compatible with the second polymer in the mixed polymer solution. The method is preferable in terms of productivity because solvent removal from the mixed polymer solution leads to moderate foaming of the polymers in exiting from a dry extruder and thus an increase in specific surface area, to result in a tendency to increase the drying speed as compared with solvent removal of only the second polymer. The solvent removal method is not particularly limited, and known solvent removal method and drying operation can be used.

(Rubber composition)

A rubber composition of the present embodiment includes the polymer blend as a rubber component, and further includes, if necessary, a filling agent component, a plasticizer component, and/or a crosslinking agent component.

The rubber composition may include not only the first polymer and the second polymer, but also, if necessary, a polymer generally used in a common rubber composition for tires. Such a polymer is not particularly limited, and examples thereof include natural rubber (NR), isoprene rubber (IR), styrene/butadiene rubber (SBR), and butadiene rubber (BR). These may be used singly or in combinations of two or more kinds thereof.

The content of the filling agent component is preferably 20 to 50 mass% under the assumption that the entire rubber composition is 100 mass%. The content of the plasticizer component is preferably 10 to 40 mass% under the assumption that the entire rubber composition is 100 mass%.

The filling agent component is compounded in the rubber composition for the purpose of reinforcing rubber, and examples thereof include white filling agents (inorganic filling agents) such as silica, calcium carbonate, mica, aluminum hydroxide, magnesium oxide, magnesium hydroxide, clay, talc, alumina, titanium oxide, and mica, and carbon black. These may be used singly or in combinations of two or more kinds thereof. In particular, silica and carbon black are preferable, and combination use thereof is more preferable.

The silica is not particularly limited, examples thereof include silica by a dry method (anhydrous silica) and silica by a wet method (water-containing silica), and silica by a wet method is preferable because of having many silanol groups.

The nitrogen adsorption specific surface area (N2SA) of the silica is preferably 60 m$^2$/g or more, more preferably 120 m$^2$/g or more from the viewpoint of wear resistance, and is preferably 300 m$^2$/g or less, more preferably 200 m$^2$/g or less from the viewpoint of low fuel economy. The nitrogen adsorption specific surface area of the silica is a value obtained by measurement with a BET method according to ASTM D3037-81.

The content of the silica is preferably 30 parts by mass or more, more preferably 50 parts by mass or more based on 100 parts by mass of the rubber component, from the viewpoint of low fuel economy. The content of the silica is preferably 120 parts by mass or less, more preferably 100 parts by mass or less from the viewpoint of Mooney viscosity.

The carbon black is not particularly limited, and examples thereof can include furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. These can be used singly or in combinations of two or more kinds thereof.

The nitrogen adsorption specific surface area (N2SA) of the carbon black is usually 5 to 200 m$^2$/g, is preferably 50 m$^2$/g or more, more preferably 80 m$^2$/g or more from the viewpoint of wear resistance, and is preferably 150 m$^2$/g or less, more preferably 120 m$^2$/g or less from the viewpoint of low fuel economy. The nitrogen adsorption specific surface area is measured according to ASTM D4820-93.

The amount of absorption of dibutyl phthalate (DBP) by the carbon black is usually 5 to 300 ml/100 g, and preferably the lower limit thereof is 80 ml/100 g and the upper limit thereof is 180 ml/100 g. The amount of absorption of DBP is measured according to ASTM D2414-93.

The content of the carbon black is preferably 1 part by mass or more, more preferably 3 parts by mass or more based on 100 parts by mass of the rubber component, from the viewpoint of wear resistance. The content of the carbon black is preferably 30 parts by mass or less, more preferably 15 parts by mass or less based on 100 parts by mass of the rubber component, from the viewpoint of low fuel economy.

The silica is preferably used in combination with a silane coupling agent. The silane coupling agent here used can be any conventionally known one, and examples thereof include sulfide-based silane coupling agents such as bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropyl methacrylate monosulfide, and 3-trimethoxysilylpropyl methacrylate monosulfide; mercaptobased compounds such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino-based silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy-based silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro-based silane coupling agents such as 3-nitropropyltrimethoxysilane and 3-nitropropyltriethoxysilane; and chloro-based silane coupling agents such as 3-chloropropyltrimethoxysilane, 3-chloropropyltriethoxysilane, 2-chloroethyltrimethoxysilane, and 2-chloroethyltriethoxysilane. These silane coupling agents may be used singly or in combinations of two or more kinds thereof. In particular, a sulfide-based silane coupling agent is preferable, and bis(3-triethoxysilylpropyl)tetrasulfide and bis(3-triethoxysilylpropyl)disulfide are more preferable, from the viewpoints of the coupling effect by the silane coupling agent, processability, and cost.

The content of the silane coupling agent is preferably 3 parts by mass or more, more preferably 5 parts by mass or more based on 100 parts by mass of the silica, from the viewpoints of low fuel economy and wear resistance. The content of the silane coupling agent is preferably 15 parts by mass or less, more preferably 10 parts by mass or less based on 100 parts by mass of the silica, from the viewpoint of Mooney viscosity.

The plasticizer component is not particularly limited, and examples thereof include an extender oil, a resin other than the above-mentioned polymers, an antioxidant, wax, stearic acid, and a vulcanization accelerator. These may be used singly or in combinations of two or more kinds thereof.

The extender oil is not particularly limited, and examples thereof can include an aromatic mineral oil (viscosity gravity constant (V.G.C. value) 0.900 to 1.049), a naphthene-based mineral oil (V.G.C. value 0.850 to 0.899), and a paraffin-based mineral oil (V.G.C. value 0.790 to 0.849).

The aromatic polycyclic content in the extender oil is preferably less than 3 mass%, more preferably less than 1 mass%. The aromatic polycyclic content is measured according to the Institute of Petroleum (IP, U.K.) 346/92 method. The content (CA) of the aromatic compound in the extender oil is preferably 20 mass% or more. These extender oils may be used in combinations of two or more kinds thereof.

The content of the extender oil is preferably 5 parts by mass or more, more preferably 10 parts by mass or more based on 100 parts by mass of the rubber component, from the viewpoint of Mooney viscosity. The content of the extender oil is preferably 50 parts by mass or less, more preferably 40 parts by mass or less based on 100 parts by mass of the rubber component, from the viewpoint of low fuel economy.

The resin is not particularly limited, and examples thereof include a C5 petroleum resin, a C9 petroleum resin, a coumarone-indene resin, an indene resin, a phenolic resin, and copolymer(s) of $\alpha$-methylstyrene and/or styrene. These may be used singly or in combinations of two or more kinds thereof. In particular, a coumarone-indene resin, a phenolic resin (in particular, terpene phenol resin), and copolymer(s) of $\alpha$-methylstyrene and/or styrene are preferable, and a copolymer of $\alpha$-methylstyrene and styrene is more preferable.

The content of the resin is preferably 1 part by mass or more, more preferably 3 parts by mass or more based on 100 parts by mass of the rubber component, from the viewpoint of wet grip performance. The content of the resin is preferably 20 parts by mass or less, more preferably 10 parts by mass or less based on 100 parts by mass of the rubber component, from the viewpoint of low fuel economy.

The antioxidant is not particularly limited, and examples thereof include naphthylamine-based antioxidants such as phenyl-$\alpha$-naphthylamine; diphenylamine-based antioxidants such as octylated diphenylamine and 4,4'-bis($\alpha$,$\alpha$'-dimethylbenzyl)diphenylamine; p-phenylenediamine-based antioxidants such as N-phenyl-N'-isopropyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymerized product of 2,2,4-trimethyl-1,2-dihydroquinoline; monophenol-based antioxidants such as 2,6-di-t-butyl-4-methylphenol and styrenated phenol; and bis, tris, and polyphenol-based antioxidants such as tetrakis-[methylene-3-(3',5'-di-t-butyl-4'-hydroxyphenyl)propoinate]methane. These may be used singly or in combinations of two or more kinds thereof. In particular, a p-phenylenediamine-based antioxidant is preferable, and N-phenyl-N'-isopropyl-p-phenylenediamine is more preferable.

The content of the antioxidant is preferably 0.1 to 5 parts by mass, more preferably 0.2 to 4 parts by mass based on 100 parts by mass of the rubber component.

The wax is not particularly limited, and examples thereof include petroleum waxes such as paraffin wax and microcrystalline wax; natural waxes such as vegetable wax and animal wax; and synthetic waxes such as a polymerized product of ethylene, propylene, or the like. These may be used singly or in combinations of two or more kinds thereof. In particular, petroleum wax is preferable and paraffin wax is more preferable.

The content of the wax is preferably 0.1 to 5 parts by mass, more preferably 0.2 to 4 parts by mass based on 100 parts by mass of the rubber component.

The stearic acid here used can be conventionally known one, and, for example, any product of NOF Corporation, Kao Corporation, FUJIFILM Wako Pure Chemical Corporation, and Chiba Fatty Acid Co., Ltd. can be used. These may be used singly or in combinations of two or more kinds thereof.

The content of the stearic acid is preferably 0.1 to 5 parts by mass, more preferably 0.2 to 4 parts by mass based on 100 parts by mass of the rubber component.

The vulcanization accelerator is not particularly limited, and examples thereof can include thiazole-based vulcanization accelerators such as 2-mercaptobenzothiazole, dibenzothiazyl disulfide, and N-cyclohexyl-2-benzothiazylsulfenamide; thiuram-based vulcanization accelerators such as tetramethyl thiuram monosulfide and tetramethyl thiuram disulfide; sulfenamide-based vulcanization accelerators such as N-cyclohexyl-2-benzothiazole sulfenamide, N-t-butyl-2-benzothiazole sulfenamide, N-oxyethylene-2-benzothiazole sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These may be used singly or in combinations of two or more kinds thereof. In particular, a sulfenamide-based vulcanization accelerator is preferable and N-cyclohexyl-2-benzothiazole sulfonamide is more preferable because the effects of the present embodiment are more suitably obtained. A guanidine-based vulcanization accelerator is preferably used in combination.

The content of the vulcanization accelerator is preferably 0.1 to 5 parts by mass, more preferably 0.2 to 4 parts by mass based on 100 parts by mass of the rubber component.

Not only the above components, but also any compounding agent(s) conventionally used in the rubber industry, for example, a vulcanizing agent such as sulfur; a vulcanization activator such as zinc oxide; organic peroxide; a processing aid such as a lubricant; and/or an antioxidant can be used in the rubber composition.

The vulcanizing agent is not particularly limited, and sulfur can be suitably used. The content of such sulfur is preferably 0.5 to 5 parts by mass, more preferably 1 to 3 parts by mass based on 100 parts by mass of the rubber component. Thus, the effects of the present embodiment are more suitably obtained.

The rubber composition is produced by a common method. That is, it can be produced by, for example, a method involving kneading each of the components by a Banbury mixer, a kneader, an open roll, or the like and then performing vulcanization.

(Pneumatic tire)

A pneumatic tire of the present embodiment includes the rubber composition. The rubber composition can be used in each member (for example, tread, side wall, carcass, belt, bead, clinch, and chafer) of the tire, and is particularly preferably used in a tread. In the case of a tread having a bilayer structure, the tread is configured from a front surface layer (cap tread) and an inner surface layer (base tread).

A tread having a multilayer structure can be produced by a method involving laminating sheet-shaped one to a predetermined shape, or a method involving charging sheet-shaped one into two or more extruders to form a bi- or multilayer structure at respective exits of heads of the extruders.

The pneumatic tire of the present embodiment is produced by a usual method by use of the rubber composition. In other words, the pneumatic tire of the present embodiment is obtained by extruding the rubber composition not vulcanized, in which the rubber component and, if necessary, various compounding agents are compounded, for processing tailored to the shape of each tire member such as a tread, and molding the resultant together with other tire member by a tire molding machine according to a usual method to thereby form an unvulcanized tire, and heating and pressurizing the unvulcanized tire in a vulcanizing machine.

The pneumatic tire of the present embodiment is suitably used in, for example, a passenger car tire, a truck/bus tire, a motorcycle tire, and a competition tire, and particularly suitably used in a passenger car tire.

Examples

Hereinafter, the present embodiment is described in more detail with reference to specific Examples and Comparative Examples.

Various physical properties in Examples and Comparative Examples were measured by the following methods.

(Weight average molecular weight (Mw) and molecular weight distribution of polymer)

A GPC measurement apparatus in which three columns each receiving polystyrene-based gel as a filling agent were connected was used for measuring a chromatogram, and the weight average molecular weight (Mw) and the molecular weight distribution (Mw/Mn) were determined based on a calibration curve with standard polystyrene. Specific measurement conditions are shown below. Measurement was performed by injecting 20 $\mu$L of the following measurement liquid into the GPC measurement apparatus.

(Measurement conditions)

Eluent: tetrahydrofuran (THF) containing 5 mmol/L of triethylamine
Guard column: trade name "TSKguardcolumn SuperH-H" manufactured by Tosoh Corporation
Separation column: product names "TSKgel SuperH5000", "TSKgel SuperH6000", and "TSKgel SuperH7000" manufactured by Tosoh Corporation, connected in the listed order.
Oven temperature: 40°C
Flow rate: 0.6 mL/min
Detector: RI detector (trade name "HLC8020" manufactured by Tosoh Corporation)
Measurement solution: measurement solution in which 10 mg of a specimen for measurement was dissolved in 20 mL of THF

(Amount of styrene bound in polymer)

A measurement sample was obtained by dissolving 100 mg of the specimen in 100 mL of chloroform. The amount (mass%) of styrene bound, based on 100 mass% of the polymer as the specimen, was determined from the amount of absorption at a wavelength (around 254 nm) of ultraviolet light absorbed by a phenyl group of styrene. The measurement apparatus here used was a spectrophotometer "UV-2450" manufactured by Shimadzu Corporation.

(Amount of 1,2-vinyl bond in butadiene portion of polymer)

A measurement sample was obtained by dissolving 50 mg of the specimen in 10 mL of carbon disulfide. An infrared spectrum was measured in the range from 600 to 1000 cm$^{-1}$ by use of a solution cell, and the amount (mol%) of a microstructure of a butadiene portion, namely, 1,2-vinyl bond, was determined from the absorbance at a predetermined wavenumber by the calculation expression according to the Hampton's method (method described in R.R. Hampton, Analytical Chemistry 21, 923 (1949)). The measurement apparatus here used was a Fourier transform infrared spectrophotometer "FT-IR230" manufactured by JASCO Corporation.

(Percentage of hydrogenation of polymer)

The integrated value with respect to the unsaturated bond moiety of a polymer before hydrogenation was obtained by 1H-NMR measurement. Next, a large amount of methanol was added to a reaction liquid after a hydrogenation reaction, to thereby precipitate and recover a hydrogenated conjugated diene-based polymer. Next, the hydrogenated conjugated diene-based polymer was extracted with acetone, and the hydrogenated conjugated diene-based polymer was dried in vacuum. The resultant was used as a sample for 1H-NMR measurement, and the percentage of hydrogenation was measured. Conditions were noted below.

(Measurement conditions)

Measurement instrument: JNM-LA400 (manufactured by JEOL Ltd.)
Solvent: deuterated chloroform
Measurement sample: each product extracted before and after hydrogenation of polymer
Concentration of sample: 50 mg/mL
Frequency in observation: 400 MHz
Chemical shift standard: TMS (tetramethylsilane)
Pulse delay: 2.904 seconds
Number of scannings: 64
Pulse width: 45°
Measurement temperature: 26°C

(Iodine value of polymer)

The iodine value of a polymer was calculated according to the method described in "JIS K 0070:1992".

(SP value of polymer)

The SP value ($MPa^{1/2}$) was calculated according to $((Molar\ cohesive\ energy)/(Molar\ volume))^{1/2}$. In the case of a polymer configured from two or more different monomers, the additivity of molar cohesive energy was satisfied, and the molar cohesive energy of the polymer was calculated from the content ratio (mol%) of each of the monomers and the molar cohesive energy of a homopolymer of such each monomer, in terms of the average value (average value prorated depending on the content ratio) of the respective molar cohesive energies of the monomers. The additivity of the molar volume was also satisfied as in the molar cohesive energy, and the molar volume of the polymer was calculated from the content ratio (mol%) of each of the monomers and the molar volume of a homopolymer of such each monomer, in terms of the average value (average value prorated depending on the content ratio) of the respective molar volumes of the monomers. The molar cohesive energy and the molar volume of a homopolymer configured from such each monomer are described in Table 1.

[Table 1]

| Polymer | Molar cohesive energy (J/mol) | Molar volume ($\times 10^{-6} m^3/mol$) |
|---|---|---|
| Polystyrene homopolymer | 36,932 | 97.0 |
| 1,2-Polybutadiene homopolymer | 16,450 | 58.3 |
| 1,4-Polybutadiene homopolymer | 18,579 | 59.1 |
| 1,2-Polybutylene homopolymer | 17,527 | 65.6 |
| Polyethylene (1,4-hydrogenated polybutadiene) homopolymer | 18,146 | 64.4 |

(Glass transition temperature of polymer: Tg)

A DSC curve was recorded with a polymer as a specimen, with a temperature rise from -100°C at a rate of 20°C/min under a flow of helium of 50 mL/min by use of a differential scanning calorimeter "DSC3200S" manufactured by Mac Science Co., Ltd., according to ISO 22768:2006, and a peak top (Inflection point) in a DSC differential curve was defined as the glass transition temperature.

(Evaluation of drying ability)

Deuterated polymer B1 obtained by a method described in Production Example 2-1 below was laid and uniformed on an aluminum tray, and the weight was measured. Thereafter, the resultant was left to still stand and dried in a thermo-hygrostat bath at a temperature of 23°C and a humidity of 50% for 30 minutes, and the water content was determined as follows. The water content of each of polymer blends C-1 to C-6 obtained by a method described in Production Example 3-1 or the like below was also calculated in the same manner.

$$\text{Water content (\%) of second polymer B1} = (1 - (\text{Weight before drying})/(\text{Weight after drying})) \times 100$$

Furthermore, the drying ability of each of the polymer blends was calculated as a relative value, and evaluated according to the following criteria. Herein, a higher value of the following drying ability (Index) exhibits easier drying of such each polymer blend than only the second polymer, and it is meant that a method undergoing a step of mixing the first polymer solution and the second polymer solution to obtain a mixed polymer solution is advantageous in terms of production.

$$\text{Drying ability (Index)} = (\text{Water content of second polymer B1})/(\text{Water content of polymer blend}) \times 100$$

◎: a drying ability (Index) of 110 or more
○: a drying ability (Index) of 105 or more and less than 110
△: a drying ability (Index) of less than 105

(Preparation of hydrogenation catalyst)

A hydrogenation catalyst for use in polymer preparation in each of Examples and Comparative Examples described below was prepared by the following method.
A reaction container purged with nitrogen was charged with 1 L of cyclohexane dried and purified, 100 mmol of bis(η5-cyclopentadienyl)titanium chloride was added thereto, and a n-hexane solution including 200 mmol of trimethylaluminum was added thereto with sufficient stirring, to perform a reaction at room temperature for about 3 days, thereby obtaining a hydrogenation catalyst.

[Production Example 1-1: production of first polymer A1]

To an autoclave reactor having an inner volume of 40 L, purged with nitrogen, were loaded 25800 g of cyclohexane, 5.50 g of 2,2-di(2-tetrahydrofuryl)propane, 1806 g of styrene, and 1920 g of 1,3-butadiene. After the temperature of the content of the reactor was adjusted to 10°C, a cyclohexane solution including 3.2 g of n-butyllithium was added and polymerization was initiated and performed in thermal insulation conditions.
When the percentage of conversion of polymerization reached 99%, 574 g of butadiene for further addition was further added into the reaction system, polymerization was made for additional 5 minutes, and a reaction liquid including a polymer was obtained. Then, 3.23 g of 2,2-dimethoxy-1-(3-(trimethoxysilyl)propyl)-1,2-azasilolidine was added as a modifying agent, and the resultant was subjected to a reaction at an active site of a polymer for 30 minutes.
Next, the temperature of a reaction liquid was set to 80°C and hydrogen was introduced into the system. The hydrogenation catalyst prepared as above was added at 60 ppm on a titanium basis relative to the amount of the monomer loaded, and a hydrogenation reaction was made at a hydrogen pressure of 0.8 MPa and an average temperature of 85°C. After reaching a predetermined cumulative flow rate of hydrogen, the temperature and pressure of the reaction liquid were returned to ordinary temperature and pressure, and the reaction liquid was extracted from the reaction container, to thereby obtain a polymer solution.
Next, an aqueous solution (temperature: 80°C) adjusted to a pH of 8.5 (pH at 80°C according to a glass electrode method, the same applied to the following.) by ammonia as a pH adjuster was placed in a solvent removal tank, the polymer solution was further added thereinto (at a proportion of the aqueous solution, of 200 parts by mass, based on 100 parts by mass of the polymer solution), and solvent removal was performed in a liquid shape (temperature: 95°C) of the solvent removal tank by steam stripping (steam temperature: 190°C) for 2 hours, to thereby obtain a water-containing polymer.

A uniaxial extruder (model: D2020 (diameter: 20 mm, L/D: 20, attached standard screw (single full flight)) was mounted to a main body of "Labo Plastomill" (model: 4M150) manufactured by Toyo Seiki Seisaku-sho, Ltd., and the temperature of the uniaxial extruder was set to 120°C and the rotational speed of the screw was fixed so that the amount of discharge was 1.5 kg/h. The water-containing polymer was fed to the extruder and a deuterated polymer was obtained through the tip of the extruder. The deuterated polymer was received in an aluminum tray and left to still stand for 2 hours, to thereby obtain first polymer A1 dried. The polymerization formulation and properties of first polymer A1 are shown in Table 2.

[Production Examples 1-2 to 1-10: production of first polymers A2 to A10]

Each of polymers A2 to A10 was obtained by the same method as in Production Example 1-1 except that the polymerization formulation was changed as described in Table 2. Properties of each of the polymers obtained are shown in Table 2.

[Production Example 2-1: production of second polymer B1]

To an autoclave reactor having an inner volume of 40 L, purged with nitrogen, were loaded 25800 g of cyclohexane, 5.09 g of 2,2-di(2-tetrahydrofuryl)propane, and 4300 g of 1,3-butadiene. After the temperature of the content of the reactor was adjusted to 10°C, a cyclohexane solution including 3.0 g of n-butyllithium was added and polymerization was initiated and performed in thermal insulation conditions.

Polymerization was made for additional 5 minutes after the percentage of conversion of polymerization reached 99%, and a reaction liquid including a polymer was obtained. Then, 3.00 g of 2,2-dimethoxy-1-(3-(trimethoxysilyl)propyl)-1,2-azasilolidine was added as a modifying agent, and the resultant was subjected to a reaction at an active site of a polymer for 30 minutes.

Next, solvent removal, dehydration extrusion, and drying were performed in the same manner as in Production Example 1-1 except that no hydrogenation reaction was performed, and thus second polymer B1 was obtained. The polymerization formulation and properties of second polymer B1 are shown in Table 2.

[Production Examples 2-2 to 2-4: production of second polymers B2 to B4]

Each of polymers B2 to B4 was obtained by the same method as in Production Example 2-1 except that the polymerization formulation was changed as described in Table 2. Properties of each of the polymers obtained are shown in Table 2.

[Table 2]

| | Production Example | | | | | | | | | | | | | |
|---|---|---|---|---|---|---|---|---|---|---|---|---|---|---|
| | 1-1 | 1-2 | 1-3 | 1-4 | 1-5 | 1-6 | 1-7 | 1-8 | 1-9 | 1-10 | 2-1 | 2-2 | 2-3 | 2-4 |
| Type of random copolymer | A1 | A2 | A3 | A4 | A5 | A6 | A7 | A8 | A9 | A10 | B1 | B2 | B3 | B4 |
| Cyclohexane (g) | 25800 | 25800 | 25800 | 25800 | 25800 | 25800 | 25800 | 25800 | 25800 | 25800 | 25800 | 25800 | 25800 | 25800 |
| 2,2-Di(2-tetrahydrofuryl)propane (g) | 5.50 | 5.38 | 3.30 | 4.71 | 3.61 | 2.63 | 5.40 | 2.22 | 1.87 | 3.06 | 5.09 | 4.94 | 3.65 | 5.16 |
| Styrene (g) | 1806 | 1892 | 1118 | 1806 | 1548 | 1634 | 2021 | 1376 | 1720 | 1892 | 0 | 430 | 215 | 860 |
| Butadiene (g) | 1920 | 1854 | 2450 | 1920 | 2119 | 2053 | 1755 | 2251 | 1987 | 1854 | 4300 | 2980 | 3145 | 2649 |
| Butadiene for further addition (g) | 574 | 554 | 732 | 574 | 633 | 613 | 524 | 673 | 593 | 554 | 0 | 890 | 940 | 791 |
| n-Butyllithium (g) | 3.2 | 3.4 | 4.3 | 2.7 | 2.1 | 2.5 | 2.5 | 2.3 | 3.3 | 3.2 | 3.0 | 2.9 | 3.4 | 3.0 |
| Modifying agent (g) | 3.23 | 3.65 | 4.49 | 2.90 | 2.18 | 2.50 | 2.68 | 2.32 | 3.39 | 3.21 | 3.00 | 3.04 | 3.55 | 3.11 |
| Hydrogenation catalyst (ppm Ti vs. polymer) | 60 | 60 | 60 | 60 | 60 | 60 | 60 | 60 | 60 | 60 | 0 | 0 | 0 | 0 |
| Amount (wt%) of styrene bound | 42 | 44 | 26 | 42 | 36 | 38 | 47 | 32 | 40 | 44 | 0 | 10 | 5 | 20 |
| Amount (mol% in Bd) of 1,2-vinyl bond | 40 | 38 | 23 | 40 | 40 | 30 | 45 | 28 | 17 | 28 | 40 | 40 | 30 | 40 |
| Mw($\times 10^4$) | 34.3 | 33.9 | 33.0 | 40.0 | 54.3 | 42.2 | 46.2 | 47.5 | 39.6 | 37.0 | 51.5 | 52.4 | 49.5 | 49.5 |
| Mw / Mn(-) | 1.3 | 1.4 | 1.5 | 1.3 | 1.3 | 1.2 | 1.4 | 1.2 | 1.5 | 1.4 | 1.3 | 1.4 | 1.5 | 1.5 |
| Total percentage (mol%) of hydrogenation | 94 | 49 | 85 | 73 | 95 | 58 | 73 | 86 | 50 | 28 | 0 | 0 | 0 | 0 |
| Iodine value (g-I/100 g-Polymer) | 16 | 135 | 54 | 74 | 16 | 122 | 69 | 46 | 140 | 190 | 470 | 423 | 447 | 376 |
| SP value (MPa^(1/2)) | 17.74 | 18.07 | 17.44 | 17.87 | 17.58 | 17.89 | 17.99 | 17.57 | 18.03 | 18.22 | 17.37 | 17.57 | 17.56 | 17.77 |
| Tg (°C) of polymer | -20 | -26 | -49 | -24 | -28 | -36 | -15 | -39 | -38 | -32 | -71 | -61 | -75 | -51 |

[Production Example 3-1: production of polymer blend C1 by polymer solution blending of first polymer A4 and second polymer B1]

Respective polymer solutions were blended so that the weight ratio between first polymer A4 and second polymer B1 was 9:91. Such respective polymer solutions were not subjected to solvent removal or the like, and the polymer solution of first polymer A4 was a polymer solution obtained from the reaction container after the hydrogenation reaction and the polymer solution of second polymer B1 was a polymer solution obtained after the reaction by the modifying agent. Next, solvent removal, dehydration extrusion, and drying were performed in the same manner as in Production Example 1-1, and thus polymer blend C1 was obtained. Evaluation of the drying ability of polymer blend C1 is shown in Table 3.

[Production Examples 3-2 to 3-6: production of polymer blends C2 to C6]

Polymer solutions were blended so that the ratio between first polymer A4 and second polymer B1 was as described in Table 3, solvent removal, dehydration extrusion, and drying were performed in the same manner as in Production Example 1-1, and thus each polymer blend was obtained. Evaluation of the drying ability of each polymer blend is shown in Table 3.

[Table 3]

| Item | Production Example 3-1 | Production Example 3-2 | Production Example 3-3 | Production Example 3-4 | Production Example 3-5 | Production Example 3-6 |
|---|---|---|---|---|---|---|
| Type of polymer blend | C1 | C2 | C3 | C4 | C5 | C6 |
| Proportion (wt%) of A4 | 9 | 20 | 29 | 36 | 50 | 60 |
| Proportion (wt%) of B1 | 91 | 80 | 71 | 64 | 50 | 40 |
| Drying ability (Index) | Δ | ○ | ◎ | ○ | Δ | Δ |

[Examples 1 to 6: evaluation of polymer blends C1 to C6]

Materials other than sulfur and a vulcanization accelerator were kneaded at 150°C for 5 minutes by use of a 1.7-L Banbury mixer manufactured by Kobe Steel, Ltd., according to the compounding content shown in Table 4, to thereby obtain each kneaded product. Next, sulfur and a vulcanization accelerator were added to such each kneaded product obtained, and the resultant was kneaded at 80°C for 5 minutes by use of an open roll, to thereby obtain each unvulcanized rubber composition.
Such each unvulcanized rubber composition obtained was vulcanized with pressing by a mold having a thickness of 0.5 mm at 170°C for 20 minutes, to thereby obtain each vulcanized rubber composition.
Such each unvulcanized rubber composition obtained was molded into a tread shape, the resulting tread was laminated with other tire member and the resultant was vulcanized at 170°C for 20 minutes, to thereby obtain each test tire.

<Evaluation items and test methods>

The unvulcanized rubber compositions, vulcanized rubber compositions, and test tires obtained were evaluated as described below. The results are shown in Table 5 below.

(1) Wear resistance

The amount of volume loss of each of the vulcanized rubber compositions (crosslinked rubber) was measured with a LAT tester (Laboratory Abrasion and Skid Tester) in conditions of a load of 50 N, a speed of 20 km/h, and a slip angle of 5°. The measurement results were indexed under the assumption that the amount of volume loss of a vulcanized rubber composition in Reference Example 1 described below was 100, and were rated according to the following indices.

◎: an index of the amount of volume loss of the vulcanized rubber composition, of 110 or more
○: an index of the amount of volume loss of the vulcanized rubber composition, of 105 or more and less than 110
△: an index of the amount of volume loss of the vulcanized rubber composition, of 95 or more and less than 105
×: an index of the amount of volume loss of the vulcanized rubber composition, of less than 95

(2) Brake performance

Each of the test tires was mounted on each of all wheels of a vehicle (domestically produced, FF 2000 cc), the braking distance from an initial speed of 100 km/h was determined on a wet asphalt road surface, and the inverse of the braking distance was indexed under the assumption that the inverse of a braking distance in Reference Example 1 described below was 100, and was rated according to the following indices.

◎: an index of the braking distance of the test tire, of 110 or more
○: an index of the braking distance of the test tire, of 105 or more and less than 110
△: an index of the braking distance of the test tire, of 95 or more and less than 105
×: an index of the braking distance of the test tire, of less than 95

(3) Long-term characteristics of brake performance

Each of the test tires was left to still stand in a thermo-hygrostat room at a temperature of 80°C and a humidity of 50% for 2000 hours, and thereafter the braking distance thereof was evaluated in terms of the index in the same manner as in (2).

◎: an index of the braking distance of the test tire, of 110 or more
○: an index of the braking distance of the test tire, of 105 or more and less than 110
△: an index of the braking distance of the test tire, of 95 or more and less than 105
×: an index of the braking distance of the test tire, of less than 95

[Table 4]

| Raw material (phr) | Example 1-6 | Example 7-22, Comparative Example 1-5 | Reference Example 1-4 |
|---|---|---|---|
| Polymer blend C1-C6 | 100 | | |
| First polymer | | 20 | |
| Second polymer | | 80 | 100 |
| Silica *1 | 75 | 75 | 75 |
| Carbon black *2 | 5 | 5 | 5 |
| Silane coupling agent *3 | 6 | 6 | 6 |
| Extender oil *4 | 30 | 30 | 30 |
| Stearic acid | 2 | 2 | 2 |
| Antioxidant *5 | 2 | 2 | 2 |
| Zinc oxide | 2.5 | 2.5 | 2.5 |
| Vulcanization accelerator CZ *6 | 1.7 | 1.7 | 1.7 |
| Vulcanization accelerator DPG *7 | 2 | 2 | 2 |
| Sulfur | 1.7 | 1.7 | 1.7 |

In Table 4, product names of respective components used are as follows.

*1: ZEOSIL 1165MP manufactured by Rhodia

*2: Diablack N339 manufactured by Mitsubishi Chemical Corporation

*3: Si75 manufactured by Evonik Industries

*4: JOMO Process NC-140 manufactured by Japan Energy. Inc

*5: Ozonone 6C manufactured by Seiko Chemical Co., Ltd.

*6: Nocceler CZ manufactured by Ouchi Shinko Chemical Industries Co., Ltd.

*7: Nocceler D manufactured by Ouchi Shinko Chemical Industries Co., Ltd.

[Table 5]

|  | Example 1 | Example 2 | Example 3 | Example 4 | Example 5 | Example 6 |
|---|---|---|---|---|---|---|
| Polymer blend | C1 | C2 | C3 | C4 | C5 | C6 |
| Difference (MPa^(1/2)) in SP value, obtained by subtracting SP value of second polymer from SP value of first polymer | 0.50 | 0.50 | 0.50 | 0.50 | 0.50 | 0.50 |
| Difference (°C) in Tg, obtained by subtracting Tg of second polymer from Tg of first polymer | 51 | 51 | 51 | 51 | 51 | 51 |
| Wear resistance | △ | ○ | ◎ | ○ | ○ | △ |
| Brake performance | ○ | ◎ | ◎ | ◎ | ○ | ○ |
| Long-term characteristics of brake performance | △ | ○ | ◎ | △ | × | × |

[Examples 7 to 22 and Comparative Examples 1 to 5: evaluation of each polymer blend of first polymers A1 to A10 and second polymers B1 to B4]

Materials other than sulfur and a vulcanization accelerator were kneaded at 150°C for 5 minutes by use of a 1.7-L Banbury mixer manufactured by Kobe Steel, Ltd., according to the compounding content shown in Table 4, with respect to each combination of the first polymer and the second polymer described in Tables 6 to 9, to thereby obtain each kneaded product with formation of each polymer blend.

Next, sulfur and a vulcanization accelerator were added to such each kneaded product obtained, and the resultant was kneaded at 80°C for 5 minutes by use of an open roll, to thereby obtain each unvulcanized rubber composition.

Such each unvulcanized rubber composition obtained was vulcanized with pressing by a mold having a thickness of 0.5 mm at 170°C for 20 minutes, to thereby obtain each vulcanized rubber composition.

Such each unvulcanized rubber composition obtained was molded into a tread shape, the resulting tread was laminated with other tire member and the resultant was vulcanized at 170°C for 20 minutes, to thereby obtain each test tire.

[Reference Examples 1 to 4: second polymer]

Each of second polymers B1 to B4 and materials other than sulfur and a vulcanization accelerator were kneaded at 150°C for 5 minutes by use of a 1.7-L Banbury mixer manufactured by Kobe Steel, Ltd., according to the compounding content shown in Table 4, to thereby obtain each kneaded product including no polymer blend.

Next, sulfur and a vulcanization accelerator were added to such each kneaded product obtained, and the resultant was kneaded at 80°C for 5 minutes by use of an open roll, to thereby obtain each unvulcanized rubber composition.

Such each unvulcanized rubber composition obtained was vulcanized with pressing by a mold having a thickness of 0.5 mm at 170°C for 20 minutes, to thereby obtain each vulcanized rubber composition.

Such each unvulcanized rubber composition obtained was molded into a tread shape, the resulting tread was laminated with other tire member and the resultant was vulcanized at 170°C for 20 minutes, to thereby obtain each test tire.

(1) Wear resistance, (2) Brake performance, and (3) Long-term characteristics of brake performance were each evaluated by indexing under the assumption that the respective measurement results were each 100. Each result in Examples 7 to 10 and Comparative Examples 1 to 3 was indexed under the assumption that the result in Reference Example 1 was 100, each result in Examples 11 to 16 and Comparative Example 4 was indexed under the assumption that the result in Reference Example 2 was 100, each result in Examples 17 to 21 and Comparative Example 5 was indexed under the assumption that the result in Reference Example 3 was 100, and each result in Example 22 was indexed under the assumption that the result in Reference Example 4 was 100, and such results were evaluated with respect to (1) to (3) described above, in the same manner as in Example 1.

[Table 6]

| | Example 7 | Example 8 | Example 9 | Example 10 | Comparative Example 1 | Comparative Example 2 | Comparative Example 3 | Reference Example 1 |
|---|---|---|---|---|---|---|---|---|
| First polymer | A1 | A4 | A6 | A8 | A2 | A7 | A9 | - |
| Second polymer | B1 | B1 | B1 | B1 | B1 | B1 | B1 | B1 |
| Difference (MPa^(1/2)) in SP value, obtained by subtracting SP value of second polymer from SP value of first polymer | 0.37 | 0.50 | 0.52 | 0.20 | 0.70 | 0.62 | 0.66 | - |
| Difference (°C) in Tg, obtained by subtracting Tg of second polymer from Tg of first polymer | 51 | 51 | 35 | 32 | 45 | 56 | 33 | - |
| Wear resistance | ○ | ○ | ○ | ○ | × | × | × | Δ |
| Brake performance | ◎ | ◎ | ○ | ○ | ○ | ○ | × | Δ |
| Long-term characteristics of brake performance | ○ | ○ | ○ | ○ | × | × | × | Δ |

EP 3 950 722 B1

[Table 7]

|  | Example 11 | Example 12 | Example 13 | Example 14 | Example 15 | Example 16 | Comparative Example 4 | Reference Example 2 |
|---|---|---|---|---|---|---|---|---|
| First polymer | A1 | A4 | A7 | A6 | A8 | A9 | A3 | - |
| Second polymer | B2 | B2 | B2 | B2 | B2 | B2 | B2 | B2 |
| Difference (MPa^(1/2)) in SP value, obtained by subtracting SP value of second polymer from SP value of first polymer | 0.18 | 0.30 | 0.42 | 0.32 | 0.00 | 0.46 | -0.13 | - |
| Difference (°C) in Tg, obtained by subtracting Tg of second polymer from Tg of first polymer | 41 | 41 | 46 | 26 | 22 | 24 | 13 | - |
| Wear resistance | ○ | ○ | ○ | ○ | ○ | ○ | × | △ |
| Brake performance | ◎ | ◎ | ◎ | ○ | ○ | ○ | × | △ |
| Long-term characteristics of brake performance | ○ | ○ | ○ | △ | △ | △ | × | △ |

24

[Table 8]

| Item | Example 17 | Example 18 | Example 19 | Example 20 | Example 21 | Comparative Example 5 | Reference Example 3 |
|---|---|---|---|---|---|---|---|
| First polymer | A1 | A4 | A7 | A5 | A8 | A3 | - |
| Second polymer | B3 | B3 | B3 | B3 | B3 | B3 | B3 |
| Difference (MPa^(1/2)) in SP value, obtained by subtracting SP value of second polymer from SP value of first polymer | 0.19 | 0.31 | 0.43 | 0.02 | 0.01 | -0.11 | - |
| Difference (°C) in Tg, obtained by subtracting Tg of second polymer from Tg of first polymer | 55 | 55 | 60 | 47 | 36 | 26 | - |
| Wear resistance | ○ | ○ | ○ | ○ | ○ | × | Δ |
| Brake performance | ◎ | ◎ | ◎ | ◎ | ○ | × | Δ |
| Long-term characteristics of brake performance | Δ | Δ | Δ | ○ | ○ | × | Δ |

[Table 9]

| Item | Example 22 | Reference Example 4 |
|---|---|---|
| First polymer | A10 | - |
| Second polymer | B4 | B4 |
| Difference (MPa^(1/2)) in SP value, obtained by subtracting SP value of second polymer from SP value of first polymer | 0.45 | - |
| Difference (°C) in Tg, obtained by subtracting Tg of second polymer from Tg of first polymer | 18 | - |
| Wear resistance | ○ | Δ |
| Brake performance | ○ | Δ |
| Long-term characteristics of brake performance | Δ | Δ |

As shown in Table 6, Examples 7 to 10 each exhibited improved wear resistance, brake performance, and long-term characteristics of brake performance, as compared with Comparative Example 1 to 3 and Reference Example 1. As shown in Table 7, Examples 11 to 16 each exhibited improved wear resistance, brake performance, and long-term characteristics of brake performance, as compared with Comparative Example 4 and Reference Example 2. As shown in Table 8, Examples 17 to 21 each exhibited improved wear resistance, long-term characteristics of brake performance, as compared with Comparative Example 5 and Reference Example 3. As shown in Table 9, Example 22 exhibited improved wear resistance, long-term characteristics of brake performance, as compared with Reference Example 4.

As described above, it has been revealed that the polymer blend in which the difference in SP value between the first polymer and the second polymer is within a specified range can be used to thereby allow the vulcanized rubber composition to be improved in wear resistance, brake performance, and long-term characteristics of brake performance in a well-balanced manner, namely, a tire tread enhanced in durability can be produced.

Industrial Applicability

The present invention can be industrially utilized as a polymer blend which can be used as a raw material for tire treads and the like.

## Claims

1.   A polymer blend comprising a first polymer and a second polymer, wherein

the first polymer is a random copolymer having an aromatic vinyl compound-derived constituent unit, a conjugated diene compound-derived constituent unit, and an ethylene-derived constituent unit,
the second polymer is a non-hydrogenated random copolymer having an aromatic vinyl compound-derived constituent unit and a conjugated diene compound-derived constituent unit, and
a value obtained by subtracting an SP value of the second polymer from an SP value of the first polymer is 0 or more and 0.6 or less, wherein SP value means compatibility parameter.

2.   The polymer blend according to claim 1, wherein

the first polymer has a glass transition temperature according to ISO 22768:2006 of -50°C or more and -10°C or less, and
the second polymer has a glass transition temperature of -90°C or more and -50°C or less.

3.   The polymer blend according to claim 1 or 2, wherein the first polymer has an iodine value according to JIS K 0070:1992 of 15 or more and 200 or less.

4.   The polymer blend according to any one of claims 1 to 3, wherein

a content of the first polymer is 5 mass% or more and 30 mass% or less based on the total amount of the polymer blend, and
a content of the second polymer is 70 mass% or more and 95 mass% or less based on the total amount of the polymer blend.

5.   The polymer blend according to any one of claims 1 to 4, wherein a value obtained by subtracting a glass transition temperature of the second polymer from a glass transition temperature of the first polymer is 20°C or more and less than 65°C.

6.   The polymer blend according to any one of claims 1 to 5, wherein the first polymer has a weight average molecular weight of $23 \times 10^4$ or more and $200 \times 10^4$ or less.

7.   A method for producing the polymer blend according to any one of claims 1 to 6, comprising:

a step of mixing a first polymer solution and a second polymer solution to obtain a mixed polymer solution, and
a step of desolvating the mixed polymer solution.

8.   A rubber composition comprising the polymer blend according to any one of claims 1 to 6, as a rubber component.

9.   A pneumatic tire comprising the rubber composition according to claim 8.

## Patentansprüche

1.   Polymergemisch, welches ein erstes Polymer und ein zweites Polymer umfasst, wobei

das erste Polymer ein Random-Copolymer ist, das eine von einer aromatischen Vinylverbindung abgeleitete konstituierende Einheit, eine von einer konjugierten Dienverbindung abgeleitete konstituierende Einheit und eine von Ethylen abgeleitete konstituierende Einheit aufweist,
das zweite Polymer ein nicht hydriertes Random-Copolymer ist, das eine von einer aromatischen Vinylverbin-

26

dung abgeleitete konstituierende Einheit und eine von einer konjugierten Dienverbindung abgeleitete konstituierende Einheit aufweist, und

ein Wert, der durch Subtraktion eines SP-Wertes des zweiten Polymers von einem SP-Wert des ersten Polymers erhalten wird, 0 oder mehr und 0,6 oder weniger ist, wobei SP-Wert Kompatibilitätsparameter bedeutet.

**2.** Polymergemisch nach Anspruch 1, wobei

das erste Polymer eine Glasübergangstemperatur gemäß ISO 22768:2006 von -50°C oder mehr und -10°C oder weniger aufweist und

das zweite Polymer eine Glasübergangstemperatur von -90°C oder mehr und -50°C oder weniger aufweist.

**3.** Polymergemisch nach Anspruch 1 oder 2, wobei das erste Polymer eine Jodzahl nach JIS K 0070:1992 von 15 oder mehr und 200 oder weniger aufweist.

**4.** Polymergemisch nach einem der Ansprüche 1 bis 3, wobei

der Gehalt des ersten Polymers 5 Massen-% oder mehr und 30 Massen- % oder weniger ist, bezogen auf die Gesamtmenge des Polymergemischs, und

der Gehalt des zweiten Polymers 70 Massen-% oder mehr und 95 Massen-%oder weniger ist, bezogen auf die Gesamtmenge des Polymergemischs.

**5.** Polymergemisch nach einem der Ansprüche 1 bis 4, wobei ein durch Subtraktion der Glasübergangstemperatur des zweiten Polymers von der Glasübergangstemperatur des ersten Polymers erhaltener Wert 20°C oder mehr und weniger als 65°C ist.

**6.** Polymergemisch nach einem der Ansprüche 1 bis 5, wobei das erste Polymer ein gewichtsmittleres Molekulargewicht von $23 \times 10^4$ oder mehr und $200 \times 10^4$ oder weniger aufweist.

**7.** Verfahren zur Herstellung des Polymergemischs nach einem der Ansprüche 1 bis 6, mit den Schritten:

einem Schritt des Mischens einer ersten Polymerlösung und einer zweiten Polymerlösung, um eine gemischte Polymerlösung zu erhalten, und

einen Schritt der Desolvatisierung der gemischten Polymerlösung.

**8.** Kautschukzusammensetzung, welche das Polymergemisch nach einem der Ansprüche 1 bis 6 als Kautschukkomponente enthält.

**9.** Luftreifen, welcher die Kautschukzusammensetzung nach Anspruch 8 enthält.

**Revendications**

**1.** Mélange de polymères comprenant un premier polymère et un second polymère, dans lequel

le premier polymère est un copolymère aléatoire ayant une unité constitutive dérivée d'un composé vinylique aromatique, une unité constitutive dérivée d'un composé diène conjugué, et une unité constitutive dérivée de l'éthylène,

le second polymère est un copolymère aléatoire non hydrogéné ayant une unité constitutive dérivée d'un composé vinylique aromatique et une unité constitutive dérivée d'un composé diène conjugué, et

une valeur obtenue par soustraction d'une valeur SP du second polymère d'une valeur SP du premier polymère est de 0 ou plus et de 0,6 ou moins, dans lequel la valeur SP désigne le paramètre de compatibilité.

**2.** Mélange de polymères selon la revendication 1, dans lequel

le premier polymère a une température de transition vitreuse selon l'ISO 22768:2006 de -50 °C ou plus et de -10 °C ou moins, et

le second polymère a une température de transition vitreuse de - 90 °C ou plus et de -50 °C ou moins.

**3.** Mélange de polymères selon la revendication 1 ou 2, dans lequel le premier polymère a un indice d'iode selon la JIS K 0070:1992 de 15 ou plus et de 200 ou moins.

**4.** Mélange de polymères selon l'une quelconque des revendications 1 à 3, dans lequel

une teneur du premier polymère est de 5 % en masse ou plus et de 30 % en masse ou moins sur la base de la quantité totale du mélange de polymères, et
une teneur du second polymère est de 70 % en masse ou plus et de 95 % en masse ou moins sur la base de la quantité totale du mélange de polymères.

**5.** Mélange de polymères selon l'une quelconque des revendications 1 à 4, dans lequel une valeur obtenue par soustraction d'une température de transition vitreuse du second polymère d'une température de transition vitreuse du premier polymère est de 20 °C ou plus et de moins de 65 °C.

**6.** Mélange de polymères selon l'une quelconque des revendications 1 à 5, dans lequel le premier polymère a un poids moléculaire moyen en poids de $23 \times 10^4$ ou plus et de $200 \times 10^4$ ou moins.

**7.** Procédé de production du mélange de polymères selon l'une quelconque des revendications 1 à 6, comprenant:

une étape de mélange d'une première solution de polymère et d'une seconde solution de polymère pour obtenir une solution de polymère mixte, et
une étape de désolvatation de la solution de polymère mixte.

**8.** Composition de caoutchouc comprenant le mélange de polymères selon l'une quelconque des revendications 1 à 6, en tant que composant de caoutchouc.

**9.** Pneu comprenant la composition de caoutchouc selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6004081 B
- WO 2018062473 A
- EP 3147328 A1
- US 2006173134 A1
- EP 3156429 A1
- EP 1514901 A1
- JP 2018131515 A

- JP 4881562 B
- EP 1612241 A1
- EP 1544241 A1
- US 2018237619 A1
- US 2012010356 A1
- JP 2020045500 A

**Non-patent literature cited in the description**

- **R.R. HAMPTON.** *Analytical Chemistry,* 1949, vol. 21, 923